# EUROPÄISCHE PATENTSCHRIFT

(11) **EP 3 784 432 B1**
(45) Veröffentlichungstag und Bekanntmachung des Hinweises auf die Patenterteilung: **07.01.2026**
(21) Anmeldenummer: 19722532.9
(22) Anmeldetag: 24.04.2019
(51) Int. Cl.: B23Q 1/01, B23Q 3/155, B23Q 7/00, B23Q 3/157, B23Q 39/02

(54) **WERKZEUGMASCHINE MIT EINER ARBEITSPINDEL AUF EINER SCHRÄGFLÄCHE**
MACHINE TOOL WITH A WORKSPINDLE ON AN SLANTED SURFACE
MACHINE-OUTIL AVEC UNE BROCHE DE TRAVAIL MONTEE SUR UNE SURFACE INCLINEE

(30) Priorität: 26.04.2018 DE 102018206510
(43) Veröffentlichungstag der Anmeldung: 03.03.2021
(73) Patentinhaber: DMG MORI Pfronten GmbH, 87459 Pfronten (DE)
(72) Erfinder: GEISSLER, Alfred, 87459 Pfronten (DE); JUNG, Robert, 87459 Pfronten (DE); RINDERLE, Martin, 87474 Buchenberg (DE); LAU, Florian, 87459 Pfronten (DE)
(74) Vertreter: MERH-IP Matias Erny Reichl Hoffmann Patentanwälte PartG mbB
(86) Internationale Anmeldenummer: PCT/EP2019/060530
(87) Internationale Veröffentlichungsnummer: WO 2019/207003

(56) Entgegenhaltungen:
- BE-A- 898 474
- DE-A1- 10 019 669
- DE-A1- 102011 082 050
- DE-A1- 3 644 024

## Beschreibung

Die Erfindung betrifft eine Werkzeugmaschine mit einem Maschinenbett und eine auf dem Maschinenbett verfahrbare Arbeitsspindel. Insbesondere betrifft die Erfindung eine Werkzeugmaschine, die mehrere Arbeitsspindeln umfasst.

Ein Maschinenkonzept mit mehreren Arbeitsspindeln ist in der Anmeldung mit dem Aktenzeichen DE 10 2017 209 606.3 des Anmelders beschrieben. Eine dort beschriebene Werkzeugmaschine umfasst insbesondere zwei Arbeitsspindeln mit Spannmitteln, die es erlauben an einer Arbeitsspindel beispielsweise ein Werkzeug aufzuspannen und an der grundsätzlich gleich ausgestalteten Gegenspindel ein Werkstück aufzuspannen oder umgekehrt. Die beiden Arbeitsspindeln sind horizontal auf einem Maschinenbett verfahrbar und erlauben eine horizontale Werkstückbearbeitung.

Eine Werkzeugmaschine nach dem Oberbegriff des Anspruchs 1 ist aus der DE 100 19 669 A1 bekannt.

Die Spindelköpfe der beiden Arbeitsspindeln sind dabei in horizontaler Richtung drehbar ausgestaltet, so dass durch einfaches Drehen des Spindelkopfes hin zu einem Manipulator oder Wechsler in äußerst effizienter Weise Werkzeuge bzw. Werkstücke in horizontaler Richtung ein- bzw. ausgewechselt werden können.

Aufgabe der Erfindung ist es einen optimierten Werkzeugmaschinenaufbau zu schaffen, der insbesondere für mehrere Spindeln geeignet ist.

Diese Aufgabe wird durch eine Werkzeugmaschine nach Patentanspruch 1 gelöst. Die Unteransprüche geben bevorzugt Ausführungsbeispiele der Erfindung an.

Erfindungsgemäß weist die Werkzeugmaschine auf ihrem Maschinenbett eine Schrägfläche auf, auf der Führungen montiert sind auf denen eine erste Arbeitsspindel schräg auf dem Maschinenbett verfahren werden kann.

Durch die Bereitstellung eines erfindungsgemäßen Schrägbetts wird es möglich die Positionierbarkeit der Arbeitsspindel auf dem Maschinenbett zu erweitern. Insbesondere wird dabei durch Drehen der Arbeitsspindel, beispielsweise in einer Wechselposition, eine Orientierung des Werkstücks bzw. des Werkzeugs in vertikaler Richtung ermöglicht, was eine wesentliche Vereinfachung des Wechselvorgangs mit sich bringen kann. Wesentlich ist dabei, dass die Schrägfläche auf dem Maschinenbett angeordnet ist, wodurch sich gegenüber der herkömmlichen Ständerbauweise, die normalerweise im Werkzeugmaschinenbau üblich ist, um eine geführte Verfahrbarkeit der Arbeitsspindel in der Richtung senkrecht zum Maschinenbett zu ermöglichen, bei der erfindungsgemäßen Ausgestaltung des Maschinenbetts mit einer Schrägfläche eine wesentliche Erhöhung der Stabilität der Führung der Arbeitsspindel ergibt, da die Schrägfläche, die direkt auf dem Maschinenbett angeordnet ist eine verbesserte Krafteinleitung bzw. eine geringere Last mit sich bringt, was zu einer exakteren Positionierbarkeit bei geringeren anliegenden Biegemomenten führt.

Weiterhin ist die Werkzeugmaschine als Doppelspindelwerkzeugmaschine ausgestaltet, die zwei (bevorzugterweise grundsätzlich gleich ausgestaltete) Arbeitsspindeln, die beide auf Schrägflächen verfahrbar geführt sind, umfasst. Dabei handelt es sich um verschiedene Schrägflächen, die in einem Winkel zueinander auf dem Maschinenbett stehen. Dadurch lassen sich die beiden Spindeln sehr variabel zu einander positionieren, ohne dass dabei die Stabilität reduziert wird. Insbesondere lassen sich Orientierungen von Werkzeug und Werkstück zueinander in sehr stabiler Weise erreichen, wie sie beispielsweise bei der Dreh- oder Schleifbearbeitung vonnöten sind.

Das erfindungsgemäße Maschinenkonzept ist dabei grundsätzlich nicht auf Einzelspindeln beschränkt, sondern ist insbesondere vorteilhaft für viele Bearbeitungsarten (Fräsen, Drehen, Schleifen) wenn es mit Arbeitsspindel und Gegenspindel umgesetzt wird, die beide auf einer Schrägfläche verfahrbar positioniert sind.

Die erfindungsgemäße Arbeitsspindel ist bei einer bevorzugten Ausgestaltung um ihre Längsachse drehbar. Vorzugsweise ist die Längsachse, um die die Arbeitsspindel(n) drehbar ist bzw. sind, senkrecht zur Bewegungsrichtung der Arbeitsspindel(n) auf der Schrägfläche angeordnet.

Weiter bevorzugt ist eine Ausgestaltung bei der die Arbeitsspindel(n) entlang ihrer Längsachse, insbesondere ihrer Drehachse, verfahrbar ausgestaltet ist bzw. sind.

Diese Längsachse bzw. Drehachse der Spindeln nimmt bei einer bevorzugten Ausgestaltung einen Winkel von 90° zu dem in der Spindelnase gespannten Werkzeug oder Werkstück ein.

Die Verfahrbarkeit der Spindel in Richtung ihrer Längs- bzw. Drehachse kann vorzugsweise durch einen Schlitten bewerkstelligt werden, der senkrecht zu dem Schlitten verfahrbar ist, mittels dessen die Arbeitsspindel auf der Schrägfläche geführt ist.

Bei Werkzeugmaschinenausgestaltungen, die mehrere Spindeln aufweisen, hat es sich als besonderes zweckmäßig erwiesen, wenn die auf der Schrägfläche geführten Spindeln in Bezug auf ihre Bewegungsrichtung koplanar angeordnet sind, d.h. die beiden Bewegungsrichtungsvektoren der beiden Arbeitsspindeln in einer gemeinsamen Ebene liegen. Vorzugsweise ist diese Ebene senkrecht zum Maschinenbett orientiert.

Bei einer besonders einfach ausgestalteten Dachbettkonstruktion einer Werkzeugmaschine des erfindungsgemäßen Maschinenkonzepts sind die beiden Schrägflächen, auf denen jeweils eine Arbeitsspindel verfahrbar geführt ist, als zwei Dachflächen mit gemeinsamem Dachfirst ausgebildet, die bevorzugterweise einen Winkel von 90 Grad zueinander einnehmen. Bevorzugterweise ist die Spindel auf einem Schlitten montiert, der auf Führungen in einer ersten Richtung verfahrbar angeordnet ist, wobei auf dem Schlitten weitere Führungen angeordnet sind, auf denen die auf dem Schlitten montierte Arbeitsspindel entlang einer Achse senkrecht zur Bewegungsrichtung der Arbeitsspindel auf der Schrägfläche verfahrbar ist.

Besondere Vorteile ergeben sich, wenn der Winkel zwischen Dachfläche und Bettoberseite einer ersten Dachfläche im Wesentlichen gleichgroß dem Winkel zwischen Dachfläche und Bettoberseite der zweiten Dachfläche bemessen ist. Hierdurch wird eine symmetrische Anordnung der beiden Verfahrachsen der Arbeitsspindel auf den Schrägflächen erreicht, so dass eine einfache, genaue Bearbeitung der Führungsflächen möglich ist und eine symmetrische Wärmeausdehnung (Thermosymmetrie) gegeben ist. Zudem wird auf diese Weise eine symmetrische Aufteilung der Verfahrwege erreicht, was ungefähr gleichlange Wechselzeiten des Werkzeugs/Werkstücks an beiden Arbeitsspindeln ermöglicht, was wiederum eine effizientere und programmiertechnisch vereinfachte Steuerung des Bearbeitungsprozesses ermöglicht.

Ein weiterer wesentlicher Vorteil der Platzierung der Arbeitsspindel auf der Schrägfläche auf dem Maschinenbett liegt darin, dass eine vertikale Anordnung der Werkstücke und/oder Werkzeuge in Wechselposition möglich ist was die Aufstellfläche der Maschine erheblich verringert. Das gegenüber der herkömmlichen Horizontal- und/oder Vertikalanordnung grundsätzlich geänderte Maschinenkonzept birgt zudem eine erhebliche Verbesserung der Arbeitsraumzugänglichkeit. Werkstücke bzw. Werkzeuge sind von außen gut erreichbar. Zudem ist kein begehbarer Arbeitsraum notwendig.

Durch das erfindungsgemäße Maschinenkonzept ergeben sich nicht nur beim Fräsen, sondern insbesondere auch bei der Dreh- oder Schleifbearbeitung erhebliche Vorteile, die mit anderen Konzepten nicht realisiert werden können.

Hier ist insbesondere die Integration eines Reitstocks mit Zentrierspitze zu nennen, der vorteilshafterweise starr und mitfahrend am Schlitten befestigt werden kann und in Spindelrichtung einen Hub vollziehen kann.

Durch die Abstützung des Werkstücks können mit einem Reitstock größere und schwerere Werkstücke bearbeitet werden. Bei dem erfindungsgemäßen Maschinenkonzept stellt der Reitstock keine Störkontur im Arbeitsraum dar. Er verbessert die Bearbeitungsgenauigkeit und ermöglicht Verfahren mit hohen Anforderungen wie Rundlaufgenauigkeit des Werkstücks, z.B. bei der Schleifbearbeitung.

Bei Stellung der Schrägflächen im 90°-Winkel zueinander können bei dem erfindungsgemäßen Maschinenkonzept umfassend eine Arbeitsspindel und eine Gegenspindel Werkstücke mittels des Reitstocks gespannt werden und eine Bearbeitung der Seitenfläche kann durch nur eine Achsbewegung erfolgen, sodass keine Achseninterpolation nötig ist.

Allgemein ausgedrückt ermöglicht das erfindungsgemäße Maschinenkonzept vollständig neue Aufspannmöglichkeiten, beispielsweise kann durch Aufnahme des Werkstücks mit einem Hydro-Dehnspannfutter/-dorn auf dem HSK-Grundkörper sowie durch eine Zentrierspitze ein extrem genauer Rundlauf des Bauteils beispielsweise bei der Schleifbearbeitung realisiert werden. Aufgrund der einfachen Fertigung der Führungsbahnen direkt am Maschinenbett sowie des thermosymmetrischen Verhaltens ergibt sich eine extremhohe Geometriegenauigkeit der Vorschubachsen, auch ohne Softwarekompensation.

Zudem können kurzgespannte Werkzeuge verwendet werden. Beispielsweise kann eine Abrichtscheibe direkt in die Gegenspindel eingewechselt werden. Dadurch lassen sich sehr genaue, universelle Schleifscheibenkonturen erzeugen, wobei beliebige Konturen möglich sind, da eine 5-Achsen-Positionierbarkeit bei dem erfindungsgemäßen Maschinenkonzept möglich ist. Auf diese Weise kann eine Schleifscheibe besser als mit herkömmlichen Verfahren abgerichtet oder in Kontur gebracht werden.

Der Winkel zwischen den beiden Dachflächen kann grundsätzlich beliebig festgelegt werden. In der Praxis wird ein Winkel von 90° als besonders vorteilhaft angesehen, insbesondere da eine vertikale Ausrichtung der Werkstücke bzw. Werkzeuge in Wechselposition bei gegebener Werkstück-/Werkzeuglänge über einen größeren Verfahrbereich ermöglicht wird.

Grundsätzlich kann bei dem erfindungsgemäßen Maschinenkonzept ein beliebiger Werkzeugspeicher verwendet werden. Eine besonders sinnvolle Ausgestaltung ergibt sich jedoch bei Verwendung eines Radmagazins, da dieses neben der hohen Speicherdichte die Möglichkeit eröffnet, ein Werkstück oder ein Werkzeug in einer Verfahrbewegung in eine vertikale Wechselposition zu verbringen, so dass ein Manipulator zum Einwechseln des Werkstücks oder des Werkzeugs in die Arbeitsspindel lediglich eine lineare Verfahrbewegung in Kombination mit einem kurzen Hub zum Spannen bzw. Lösen der Werkzeuge bzw. Werkstücke vornehmen muss. Zu dem ergibt sich bei einem beispielsweise seitlich angeordneten Radmagazin eine sehr hohe Werkzeug-/Werkstückspeicherdichte bei geringer Aufstellfläche und gleichzeitig kurzen Wechselwegen.

Durch die vertikale Wechselposition ergibt sich zudem die Möglichkeit einer automatischen Rohteil-Bestückung des Radmagazins. Aus diesem Grund wird nicht mehr für jedes Rohteil ein Werkstückträger benötigt. Dies ist gegenüber herkömmlichen Maschinenkonzepten ein ganz wesentlicher Vorteil, da insbesondere bei der Bearbeitung einer Vielzahl von Werkstücken dies in äußerst effizienter Weise mit vergleichsweise geringer Zahl an Werkstückträgern vollzogen werden kann. Eine vorteilhafte Gesamtanordnung der Werkzeugmaschine umfasst zwei Arbeitsspindeln und zwei Radmagazine, wobei die Radmagazine einander parallel gegenüber liegend seitlich zu den beiden Arbeitsspindeln angeordnet sind, so dass eine Anordnung resultiert, bei der die beiden Arbeitsspindeln stirnseitig von den Radmagazinen begrenzt werden. Auf diese Weise ist eine hohen Werkstück- bzw. Werkzeugdichte bei geringer Aufstellfläche realisierbar und gleichzeitig ist der eigentliche Bearbeitungsraum von vorne gut zugänglich.

Äußerst effiziente Arbeitsabläufe, die dem Durchsatz einer Vielzahl von Werkstücken in sehr kurzen Zeiträumen dienen einschließlich der damit verbundenen Wechselvorgänge ermöglichen, werden durch Bereitstellung einer zusätzlichen Speichereinheit zur Aufnahme von Werkzeugen und oder Werkstücken ermöglicht, die dazu eingerichtet ist, Werkzeuge und oder Werkstücke in eine Entnahmeposition zu verbringen, aus der die Werkzeuge und oder Werkstücke in das Radmagazin eingewechselt oder aus dem Radmagazin ausgewechselt werden können. Eine einfache und sinnvolle Ausgestaltung einer derartigen Speichereinheit besteht aus einem Förderband, das vorzugsweise parallel zu dem Radmagazin verlaufend angeordnet ist.

Der Manipulator zum Ein- bzw. Auswechseln der Werkzeuge und oder Werkstücke kann in diesem Fall eine Hubvorrichtung umfassen mittels derer Werkzeuge und/oder Werkstücke aus einer Wechselposition auf dem Förderband angehoben, und in das Radmagazin oder direkt in die Arbeitsspindel eingewechselt werden können. Bei Kombination einer derartigen Speichereinheit mit einem Radmagazin als Zwischenspeicher ergibt sich die Möglichkeit die Anzahl der benötigten Spannfutter erheblich zu reduzieren, was insbesondere bei einer 6-Seiten-Bearbeitung, bei der ein Werkstückträger eine Spann- bzw. Lösefunktion aufweist, ein erhebliches Kosteneinsparungspotential bietet.

Beispielsweise kann bei einer derartigen Ausgestaltung umfassend eine Kombination aus Radmagazin und (zusätzlicher) Speichereinheit der Manipulator das Spannmittel in eine Wechselposition der Speichereinheit verfahren, durch eine Hubbewegung das Werkstück oder Werkzeug aufnehmen und komplett mit dem Spannmittel durch Verfahren in das Radmagazin oder in die Spindel einwechseln. Grundsätzlich ist es dabei auch möglich ohne Radmagazin als Zwischenspeicher zu arbeiten, falls nur eine 5-Seiten-Bearbeitung gewünscht ist, bei der das Werkstück nicht umgespannt werden muss.

In diesem Fall, in dem folglich die Speichereinheit, insbesondere das Förderband, als Hauptspeicher fungiert wird nur ein Futter benötigt wenngleich gegenüber der Variante mit Radmagazin ein langsamerer Einwechselvorgang resultiert.

Ein im Hinblick auf die Rohteilautomation optimiertes Maschinenkonzept gemäß der vorliegenden Erfindung umfasst zwei Arbeitsspindeln, denen jeweils ein Radmagazin zugeordnet ist sowie zwei zusätzliche Speichereinheiten, die jeweils einem Radmagazin zugeordnet sind, wobei die Werkzeugmaschine so eingerichtet ist, die Werkzeuge und/oder Werkstücke über die erste Speichereinheit bzw. das erste Radmagazin der Bearbeitung zuzuführen und nach der Bearbeitung über die zweite Speichereinheit bzw. das zweite Radmagazin abzutransportieren. Indem beispielsweise das Förderband als Ablageband für Fertigteile eingesetzt wird, ergibt sich insbesondere bei der 5-Seiten-Bearbeitung ein sehr hoher Teildurchsatz, der mit herkömmlichen Maschinenkonzepten bislang nicht verwirklich werden konnte. Selbstverständlich ist es auch bei einer derartigen Ausgestaltung möglich, auf die Radmagazine bei entsprechender Einbuße der Werkstückwechselzeit im Rahmen der 5-Seiten-Bearbeitung zu verzichten, so dass dieses Automationskonzept im Grunde genommen auch gänzlich ohne Radmagazin auskommen kann.

Weitergehende Einzelheiten und Vorteile der vorliegenden Erfindung werden anhand der nachfolgenden Beschreibung von Ausführungsbeispielen der erfindungsgemäßen Werkzeugmaschine anhand der Figuren deutlich.

Es zeigen:
Figur 1: Ein erstes Ausführungsbeispiel einer erfindungsgemäßen Werkzeugmaschine mit einem erfindungsgemäßen Maschinenbett.
Figur 2: Darstellung des Maschinenbettes der Werkzeugmaschine aus Figur 1.
Figur 3: Ein zweites Ausführungsbeispiel einer erfindungsgemäßen Werkzeugmaschine mit einem erfindungsgemäßen Maschinenbett.
Figur 4: Die Werkzeugmaschine aus Figur 3 in perspektivischer Draufsicht.
Figur 5: Ein drittes Ausführungsbeispiel einer erfindungsgemäßen Werkzeugmaschine mit einem erfindungsgemäßen Maschinenbett.
Figur 6a: Ein zweites Ausführungsbeispiel des Maschinenbettes der Werkzeugmaschine aus Figur 2.
Figur 6b: Ein drittes Ausführungsbeispiel des Maschinenbettes der Werkzeugmaschine aus Figur 2.

### Detaillierte Beschreibung der Figuren

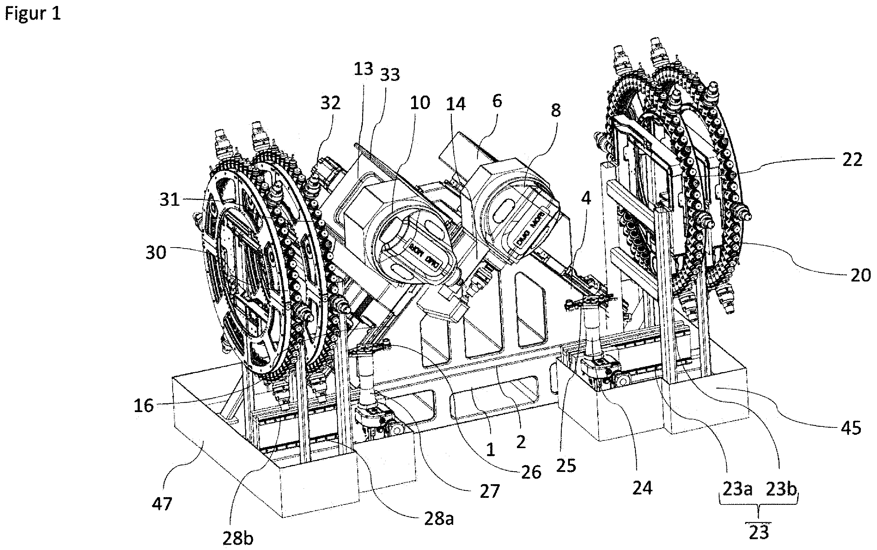

**Figur 1** ist ein erstes Ausführungsbeispiel einer erfindungsgemäßen Werkzeugmaschine, die ein Maschinenbett (1) mit zwei Arbeitsspindeln (8; 10) auf einer Dachkonstruktion angeordnet und vier Radmagazinen (20; 22; 30; 31) umfasst. Das Maschinenbett (1) umfasst auf einer Oberseite (2) ein Dach mit zwei Dachflächen, die als eine erste Schrägfläche (4) und als eine zweite Schrägfläche (16) ausgebildet sind, auf denen die erste Arbeitsspindel (8) bzw. die zweite Arbeitsspindel (10) verfahrbar angeordnet sind.

Der Aufbau umfasst das Maschinenbett (1), das als Dachbett ausgeführt ist, sowie ein erstes und zweites Strukturteil (45; 47) in rippenartigen Ausgestaltungen, auf dessen Oberseite jeweils zwei Radmagazine (20, 22; 30, 31) angeordnet sind.

Die Radmagazine (20, 22; 30, 31) nehmen Werkstücke und Werkzeuge mit Spannmitteln oder aber auch Spannmittel ohne Werkstück oder Werkzeug auf. Die Spannmittel werden auf einer Umfangsfläche der Radmagazine (20, 22; 30, 31) aufgenommen, wobei durch Drehen der Radmagazine (20, 22; 30, 31) die Spannmittel in eine gewünschte Position gebracht werden.

Unterhalb der beiden Radmagazine (20; 22), die auf der Oberseite des ersten Strukturteiles (45) eingerichtet sind, sind Führungen (23a, 23b) auf dem Strukturteil angeordnet, die in waagerechter Richtung positioniert und parallel zueinander sind. Auf den Führungen (23a, 23b) ist ein erster stabförmiger Manipulator (24) angeordnet, der in einer vertikalen Richtung ausgerichtet ist. Der erste Manipulator (24) weist einen Greifer (25) auf, mittels dessen Werkzeuge oder Werkstücke gegriffen werden können. Der erste Manipulator (24) verfährt auf den Führungen (23a, 23b) unterhalb eines der beiden Radmagazine (20; 22), wobei ein Werkzeug oder Werkstück in einem der Radmagazine (20; 22) nach unten gerichtet positioniert wird und eine Übergabe des Werkstück oder Werkzeug von einem der beiden Radmagazine (20; 22) in den ersten Manipulator (24) vertikal ausgeführt wird. Nach Aufnahme eines Werkstückes oder Werkzeuges ist der erste Manipulator (24) auf den Führungen (23a, 23b) verfahrbar, sodass das Werkstück oder Werkzeug von einem der beiden Radmagazine (20; 22) zum anderen Radmagazin (22; 20) oder bis zur ersten Arbeitsspindel (8) transportiert werden kann. Bei Übergabe des Werkstückes oder Werkzeuges von dem ersten Manipulator (24) an die erste Arbeitsspindel (8) wird die erste Arbeitsspindel (8) auf der ersten Schrägfläche (4) so verfahren und gedreht, dass der Arbeitsspindelkopf vertikal eingerichtet ist. In gleicherweise wie Werkzeuge oder Werkstücke von einem der beiden Radmagazine (20; 22) in die erste Arbeitsspindel (8) eingewechselt werden, können die Werkzeuge oder die Werkstücke, die in der ersten Arbeitsspindel (8) bereits gespannt sind, ausgewechselt werden.

Aufgrund eines symmetrischen Aufbaus der Werkzeugmaschine ist die Aufnahme bzw. Entnahme von Werkzeugen oder Werkstücken in die beiden Radmagazinen (30; 31) bzw. aus den beiden Radmagazine (30; 31) auf dem zweiten Strukturteil (47) des Aufbaus und das Aufspannen bzw. Lösen von Werkzeugen oder Werkstücken in bzw. aus der zweiten Arbeitsspindel (10) gleich eingerichtet wie in den beiden Radmagazinen (20, 22) auf dem ersten Strukturteil (45) und der ersten Arbeitsspindel (8).

Durch Hinzunahme von weiteren Radmagazinen kann die Speicherkapazität erheblich erweitert werden, wobei die Aufstellfläche klein gehalten wird.

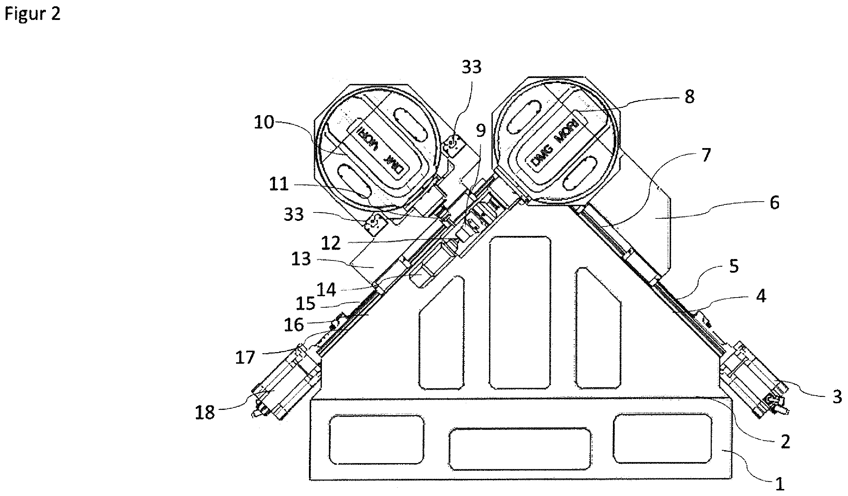

In **Figur 2** wird das Maschinenbett (1) der erfindungsgemäßen Werkzeugmaschine aus Figur 1 dargestellt. Das Maschinenbett (1) besteht aus einem quaderförmigen Grundkörper mit einer Oberseite (2). Die Oberseite (2) des Maschinenbettes umfasst die erste Schrägfläche (4) und die zweite Schrägfläche (16), die beide einen Winkel zu der Oberseite (2) des Maschinenbettes (1) bilden und sich in einer Schnittkante treffen. Der Winkel zwischen der Oberseite (2) und der ersten Schrägfläche (4) liegt bei 45 Grad und ist gleich groß wie der Winkel zwischen der Oberseite (2) und der zweiten Schrägfläche (16), sodass ein thermosymmetrischer Aufbau resultiert. Die erste Schrägfläche (4) und die zweite Schrägfläche (16) sind gleich groß bemessen. Die beiden Schrägflächen (4; 16) bilden auf der Oberseite (2) des Maschinenbettes (1) das Dach mit zwei Dachflächen, wobei eine erste Dachfläche durch die erste Schrägfläche (4) und eine zweite Dachfläche durch die zweite Schrägfläche (16) gebildet ist. Der Winkel zwischen den beiden Schrägflächen (4; 16) beträgt bei diesem Ausführungsbeispiel 90 Grad. Die Querschnitte der Oberseite (2) des Maschinenbettes und die der beiden Schrägflächen (4; 16) bilden eine dreieckige Fläche. Durch eine geänderte abflachende Dachkonstruktion der beiden Schrägflächen können aus den Querschnitten der Oberseite und der beiden Schrägflächen eine trapezartige Fläche gebildet werden.

Auf der Oberseite der ersten Schrägfläche (4) sind parallel zueinander ausgerichtete Führungen (7) montiert, auf denen ein erster Schlitten (6) verfahrbar angeordnet ist. Der erste Schlitten (6) ist auf der ersten Schrägfläche (4) mittels eines Motors (3) mit einem Kugelgewindetrieb (5) in eine Bewegungsrichtung verfahrbar. Anstatt des Motors (3) mit dem Kugelgewindetrieb (5) sind andere Antriebsarten wie Linearmotoren für die Verfahrbarkeit des ersten Schlittens (6) möglich. Auf dem ersten Schlitten (6) ist die erste Arbeitsspindel (8) montiert, die durch den ersten Schlitten (6) auf der ersten Schrägfläche (4) verfahren werden kann. Die erste Arbeitsspindel (8) umfasst ein Spannmittel, in dem ein Werkstück (9) gespannt ist. Neben Werkstücken (9) können in gleicherweise Werkzeuge in der erste Arbeitsspindel (8) aufgespannt werden. Das Spannmittel umfasst eine Spann-/Lösefunktion, um Werkzeuge oder Werkstücke sicher und fest in das Spannmittel einzuspannen oder bei Bedarf schnell zu lösen.

Der erste Schlitten (6) umfasst einen Reitstock (14), der senkrecht zu der Bewegungsrichtung des ersten Schlittens (6) auf der ersten Schrägfläche (4) angeordnet ist. An dem Reitstock (14) ist eine Zentrierspitze (12) montiert, sodass das in der ersten Arbeitsspindel (8) gespannte Werkstück (9) im Reitstock (14) zwischen der ersten Arbeitsspindel (8) und der Zentrierspitze (12) gehalten werden kann. Der Reitstock (14) ist starr und mitfahrend am ersten Schlitten (6) befestigt und dient der Abstützung größerer und schwererer Werkstücke.

Zur weiteren Verbesserung des Rundlaufs kann in die erste Arbeitsspindel (8) ein Hydrodehnspanndorn eingesetzt werden, mit dem die Drehbewegungen der ersten Arbeitsspindel (8) optimal an das Werkstück (9) weitergeleitet werden kann. Als ein zusätzliches Erweiterungsgerät der ersten Arbeitsspindel (8) kann ein Abrichtrad in die erste Arbeitsspindel (8) eingesetzt werden, wodurch sich genaue universelle Schleifscheibenkonturen erzeugen lassen.

Auf der zweiten Schrägfläche (16) sind Führungen (17) montiert, auf denen ein zweiter Schlitten (13) auf der zweiten Schrägfläche (16) verfahrbar angeordnet ist. Der zweite Schlitten (13) wird durch einen Motor (18) mit einem Kugelgewindetrieb (15) angetrieben. Auf dem zweiten Schlitten (13) sind senkrecht zur Bewegungsrichtung des zweiten Schlittens (13) auf der zweiten Schrägfläche (16) Führungen (33) montiert, in denen eine zweite Arbeitsspindel (10) verfahrbar angeordnet ist. Somit ist die zweite Arbeitsspindel (10) durch die Bewegung des zweiten Schlittens (13) auf der zweiten Schrägfläche verfahrbar und kann zusätzlich durch die Führungen (33) auf dem zweiten Schlitten (13) durch einen Motor (32)(siehe in Figur 1) und einen Kugelgewindetrieb in eine zweite Richtung verfahren werden, die senkrecht zu der Bewegungsrichtung der zweiten Arbeitsspindel (10) auf der zweiten Schrägfläche (16) ist. Auch der zweite Schlitten (13) kann anstatt eines Kugelgewindetriebes mit einem Linearmotor betrieben werden. In der zweiten Arbeitsspindel (10) ist ein Werkzeug (11) eingespannt, mit dem das Werkstück (9) bearbeitet wird, das in der ersten Arbeitsspindel (8) auf der ersten Schrägfläche (4) aufgespannt ist.

Bei einer Schleifbearbeitung wird das Werkstück (9) in der ersten Arbeitsspindel (8) festgehalten und der erste Schlitten (6) steht in einer Position auf der ersten Schrägfläche (4) still. Die zweite Arbeitsspindel (10), indem das Werkzeug (11) gespannt ist, wird durch den zweiten Schlitten (13) auf der zweiten Schrägfläche (16) verfahren, wodurch Schleifarbeiten auf dem Werkstück (9) verrichtet werden. Da die beiden Schrägflächen (4; 16) senkrecht zueinander in einem 90 Grad Winkel stehen, bewegt sich die zweite Arbeitsspindel (10) allein durch einen Antrieb auf der zweiten Schrägfläche (16) längs des Werkstückes (9), sodass bei der Schleifbearbeitung keine Achseninterpolation nötig ist, um die Bewegung längs des Werkstückes (9) durchzuführen.

In beiden Arbeitsspindeln (8; 10) können grundsätzlich sowohl Werkzeuge als auch Werkstücke gespannt werden. Die Verfahrwege des ersten Schlittens (6) auf der ersten Schrägfläche (4) sind gleich der Verfahrwege des zweiten Schlittens (13) auf der zweiten Schrägfläche (16), wodurch eine symmetrische Aufteilung der Verfahrwege ermöglicht wird. Zusätzlich entstehen dadurch beim Wechseln von Werkzeugen oder Werkstücken aus den beiden Arbeitsspindeln (8; 10) gleichlange Wechselzeiten.

Die beiden Arbeitsspindeln (8; 10) sind um ihre Mittelachse drehbar, die senkrecht zu der Bewegungsrichtung der beiden Arbeitsspindeln (8; 10) auf den beiden Schrägflächen (4; 16) angeordnet sind. Es können kurz gespannte Werkzeuge in beiden Arbeitsspindeln (8; 10) eingespannt werden.

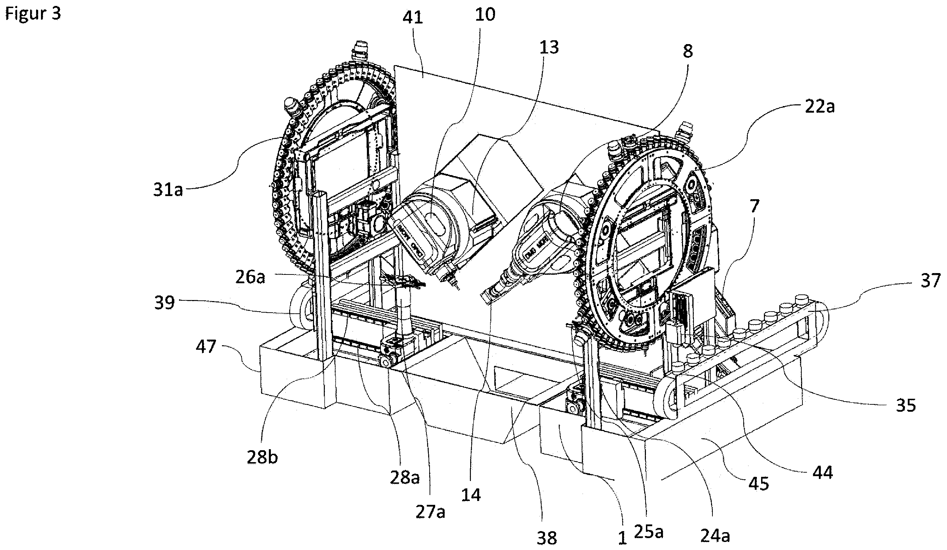

In **Figur 3** ist ein zweites Ausführungsbeispiel einer erfindungsgemäßen Werkzeugmaschine dargestellt. Die Werkzeugmaschine hat grundsätzlich einen ähnlichen Aufbau wie die in Figur 1 dargestellte Werkzeugmaschine, wobei die äußeren Radmagazine (20; 30) durch Förderbänder (37; 39), die als Speichereinheit vorgesehen sind, ersetzt werden und der Aufbau durch eine Spänewanne (38) und eine Begrenzungswand (41) erweitert wurde.

Ein erstes zum ersten Radmagazin (22a) parallel angeordnetes und auf der Oberseite des zweiten Strukturteils (45) montiertes Förderband (37) transportiert Werkstücke oder Werkzeuge, die zu einer Entnahmeposition (44) auf dem Förderband (37) hingeführt oder von der Entnahmeposition (44) wegtransportiert werden. Eine Hubvorrichtung (35) steht vertikal über einem auf der Entnahmeposition (44) aufgestellten Werkstück. Die Hubvorrichtung (35) ist auf einem Gestell montiert, das zwischen dem ersten Radmagazin (22a) und dem ersten Förderband (37) angeordnet ist, sodass die Hubvorrichtung (35) über der Entnahmeposition (44) eingerichtet ist. Die Hubvorrichtung (35) kann anstatt auf dem Gestell gleichermaßen in einem ersten Manipulator (24a) verbaut sein. Bei einem Wechsel von einem Werkstück von dem ersten Förderband (37) in den ersten Manipulator (24a) wird das Werkstück von der Hubvorrichtung (35), in der sich ein Spannmittel befindet, vertikal angehoben. Ein Greifer (25a) des ersten Manipulators (24a) kann das angehobene Spannmittel inklusive Werkstück greifen und aufnehmen. Nachdem das Werkstück aufgenommen wurde, kann der erste Manipulator (24a) zum ersten Radmagazin (22a) oder bis zur ersten Arbeitsspindel (8) verfahren, wo das Spannmittel samt Werkstück aufgenommen wird. In dem ersten Radmagazin (22a) können Spannmittel mit oder ohne Werkstücke zwischengespeichert werden.

Bei der Aufnahme von Werkzeugen oder Werkstücken in das erste Radmagazin (22a) oder in die erste Arbeitsspindel (8) wird ein Spannmittel ohne Werkstück von dem ersten Manipulator (24a) aus dem ersten Radmagazin (22a) entnommen und zu der Hubvorrichtung (35) transportiert. Die Hubvorrichtung (35) nimmt das Spannmittel auf. Das Werkzeug oder Werkstück auf der Entnahmeposition (44) auf dem ersten Förderband (37) wird in das Spannmittel in der Hubvorrichtung (35) gespannt. Das Spannmittel mit gespanntem Werkstück wird von dem ersten Manipulator (24a) aus der Hubvorrichtung (35) entnommen und kann dann zum ersten Radmagazin (22a) zum Zwischenspeichern des Werkzeuges oder des Werkstückes oder direkt zur ersten Arbeitsspindel (8) verfahren werden. Wenn das erste Radmagazin (22a) als Zwischenspeicher genutzt wird, können Spannmittel ohne Werkstücke bereitgestellt werden, sodass bei diesem beschriebenen Bearbeitungsverfahren Spannmittel mehrmals verwendet werden. Daraus resultiert eine Reduzierung der Spannmittel in einem Bearbeitungsprozess der Werkzeugmaschine, da nicht jedes Werkzeug oder Werkstück ein eigenes Spannmittel benötigt.

Aufgrund eines symmetrischen Aufbaus der Werkzeugmaschine ist die Aufnahme bzw. Entnahme von Werkzeugen oder Werkstücken einer zweiten Hubvorrichtung von einem zweiten Förderband (39), das Zwischenspeichern von Werkzeugen und Werkstücken in einem zweiten Radmagazin (31a) und das Aufspannen bzw. Lösen von Werkzeugen oder Werkstücken in bzw. aus der zweiten Arbeitsspindel (10) gleich eingerichtet wie die Aufnahme bzw. Entnahme von Werkzeugen oder Werkstücken der ersten Hubvorrichtung (35) von dem ersten Förderband (39), das Zwischenspeichern von Werkzeugen und Werkstücken in dem ersten Radmagazin (22a) und das Aufspannen bzw. Lösen von Werkzeugen oder Werkstücken in bzw. aus der ersten Arbeitsspindel (8).

Durch den symmetrischen Aufbau der Werkzeugmaschine kann eine 6-Seitenbearbeitung realisiert werden, indem ein über das erste Förderband (37) hinzugeführte und in der ersten Arbeitsspindel (8) bearbeitete Werkstück erst gelöst und dann in die zweite Arbeitsspindel (10) zu einer weiteren Bearbeitung gespannt wird. Nach der Bearbeitung in der zweiten Arbeitsspindel (10) kann das Werkstück über das zweite Förderband (39) wegtransportiert werden. Daraus ergibt sich ein Bearbeitungsverfahren mit einem Kreislauf, indem Werkstücke zur Bearbeitung über das erste Förderband (37) hinzugeführt und nach der Bearbeitung über das zweite Förderband (39) abtransportiert werden.

Bei einer erwünschten 5-Seitenbearbeitung muss das Werkstück nicht von der ersten Arbeitsspindel (8) in die zweite Arbeitsspindel (10) überführt werden, sodass dieser Bearbeitungsschritt nicht ausgeführt werden muss und das Werkstück nach der Bearbeitung in der ersten Arbeitsspindel (8) über den ersten Manipulator (24a) und der ersten Hubvorrichtung (35) an das erste Förderband (37) zum Wegtransportieren weitergegeben wird.

Bei der Bearbeitung von Werkstücken fallen Späne an. Im Bereich vor dem Maschinenbett (1) ist unterhalb der beiden Arbeitsspindeln (8; 10) eine Spänewanne (38) angeordnet, in denen die Späne bei der Bearbeitung gesammelt werden, sodass die Späne keine Störungen im Arbeitsbereich der beiden Arbeitsspindeln (8; 10) oder beim Verfahren der beiden Manipulatoren (24a; 27a) verursachen. In vertikaler Richtung ausgerichtet ist von dem ersten Strukturteil (45) bis zu dem zweiten Strukturteil (47) des Aufbaus auf dem Maschinenbett (1) eine Begrenzungswand (41) montiert, um den Spänefall im Maschinenbett (1) zu reduzieren und die Späne auf den Bereich der Spänewanne (38) zu konzentrieren. Die Begrenzungswand (41) ist in der Ebene der Bewegungsrichtung der beiden Schlitten (6; 13) ausgerichtet. Die Begrenzungswand (41) umfasst Aussparungen, durch die die beiden Arbeitsspindeln (8; 10) durchragen, sodass die beiden Arbeitsspindeln (8; 10) auf den beiden Schrägflächen (4; 16) weiter verfahren können. Die Begrenzungswand (41) besteht aus Plexiglas oder einem Metall und ist widerstandsfähig. Jedoch sind andere Materialen wie Glas oder Plastik als Begrenzungswand (41) gleichermaßen anwendbar.

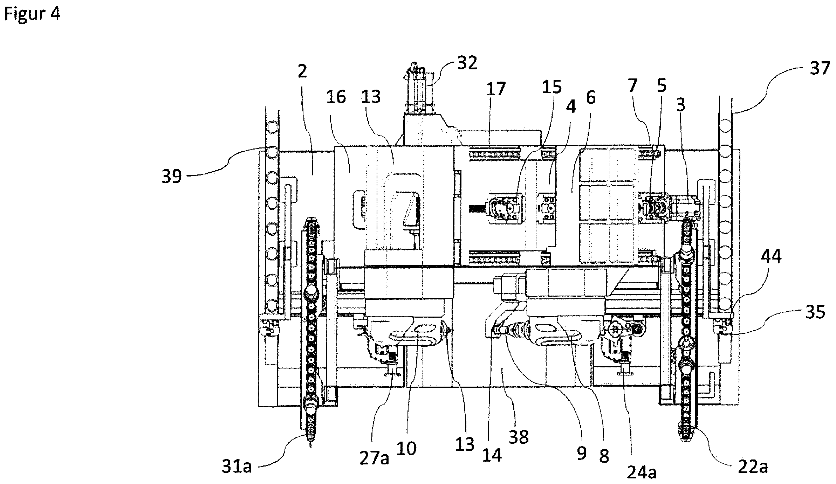

In **Figur 4** wird die erfindungsgemäße Werkzeugmaschine aus Figur 3 in einer Draufsicht dargestellt. Die Werkzeugmaschine mit den beiden Arbeitsspindeln (8; 10), die auf den beiden Schrägflächen (4; 16) verfahrbar angeordnet sind, umfasst die beiden Radmagazine (22a; 31a), die das Dachbett seitlichen begrenzen, wobei seitlich neben den Radmagazinen (22a; 31a) jeweils das erste Förderband (37) und das zweite Förderband (39) angeordnet sind. Das Dachbett umfasst die beiden Schrägflächen (4; 16), die in einem Winkel von 90 Grad zueinander stehen. Auf den beiden Schrägflächen (4; 16) sind die Führungen (7; 17) angeordnet, auf denen die beiden Schlitten (6; 13) verfahrbar montiert sind. Die beiden Führungen (7; 17) auf den beiden Schrägflächen (4; 16) liegen auf einer vertikalen Ebene die senkrecht zu dem Maschinenbett (1) orientiert ist, sodass die beiden Schlitten (6; 13) in einer gleichen Linie verfahren werden. Die beiden Arbeitsspindeln (8; 10) sind jeweils auf einen der beiden Schlitten (6; 13) montiert und liegen auf einer gleichen vertikalen Ebene, wobei die Bewegungsrichtungsvektoren der beiden Arbeitsspindeln (8; 10) auf dieser Ebene liegen.

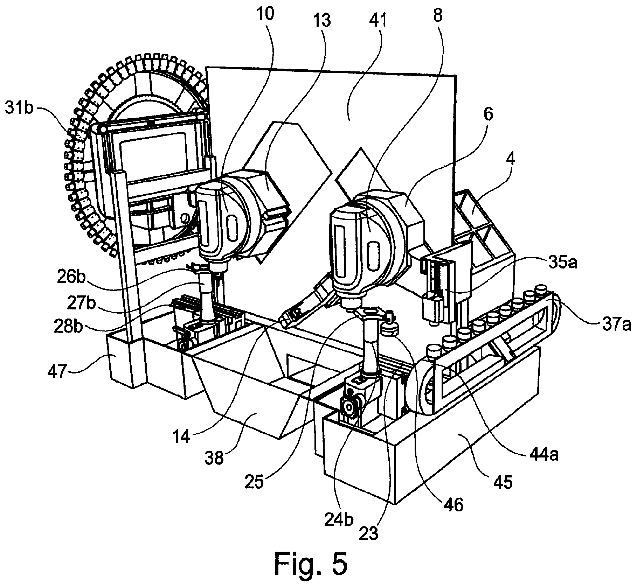

Die in **Figur 5** dargestellte erfindungsgemäße Werkzeugmaschine umfasst grundsätzlich einen ähnlichen Aufbau wie die in Figur 3 dargestellten Werkzeugmaschine. Die Werkzeugmaschine wurde dahingehend konfiguriert, dass die Werkzeugmaschine lediglich nur ein Förderband (37a) auf dem ersten Strukturteil (45) des Maschinenaufbaus und nur ein Radmagazin (22b) auf dem zweiten Strukturteil (47) des Maschinenaufbaus montiert hat.

Durch das Förderband (37a) werden Werkstücke zu einer Entnahmeposition (44a) transportiert. Ein Manipulator (24b) hat in einem Greifer (25b) ein Spannmittel (46) aufgenommen. Das Spannmittel (46) hat eine Spann-/Lösefunktion, wodurch Werkstücke fest in das Spannmittel (46) gespannt und nach Bedarf wieder gelöst werden können. Das Spannmittel (46) wird von dem Manipulator (24b) zu einer Hubvorrichtung (35a) verfahren, wobei die Hubvorrichtung (35a) das Spannmittel (46) vertikal aufnimmt. Die Hubvorrichtung (35a) umfasst eine Entriegelungseinheit, in der die Spann-/Lösefunktion des Spannmittels (46) bedient werden kann. Das in dem Spannmittel (46) gespannte Werkstück wird von der Hubvorrichtung (35a) durch den Manipulator (24b) zu der ersten Arbeitsspindel (8) transportiert, wo das Spannmittel (46) mit dem Werkstück gespannt wird. Nach dem Bearbeiten des Werkstückes mittels des in der zweiten Arbeitsspindel (10) gespannten Werkzeuges wird das Werkstück mit dem Spannmittel (46) vertikal an den Manipulator (24b) abgegeben. Das Spannmittel (46) mit dem fertig bearbeiteten Werkstück wird zu der Hubvorrichtung (35a) verfahren, wo das Werkstück an das Förderband (37a) abgeben wird und das fertig bearbeitete Werkstück von dem Förderband (37a) abtransportiert werden kann. Bei der Übergabe an das Förderband (37a) wird das Spannmittel (46) mit dem Werkstück von der Hubvorrichtung (35a) aufgenommen. Durch die Entriegelungseinheit und der Lösefunktion wird das Werkstück von dem Spannmittel (46) gelöst und vertikal auf das Förderband (37a) in die Entnahmeposition (44a) gelegt. Das fertig bearbeitete Werkstück wird abtransportiert und ein neues zu bearbeitendes Werkstück wird zu der Entnahmeposition (44) transportiert, welches wieder in das Spannmittel (46) eingespannt wird.

Für das Bearbeiten von Werkstücken mit der Werkzeugmaschine wird nur das eine Spannmittel (46) für die Bearbeitung von mehreren Werkstücken benötigt.

Das Radmagazin (31b) hat mehrere Werkzeuge aufgenommen, die bei einer Bearbeitung über einen zweiten Manipulator (27b) zu der zweiten Arbeitsspindel (10) transportiert werden. Das Radmagazin (31b) dient zur Speicherung von Werkzeugen, die in die zweite Arbeitsspindel (10) gespannt werden können.

Bei einer Bearbeitung von Werkzeugen mit der Werkzeugmaschine werden in die zweite Arbeitsspindel (10) die Werkzeuge und die erste Arbeitsspindel (8) die Werkstücke gespannt, wodurch die Werkstücke in einer 5-Seitenbearbeitung bearbeitet werden.

Bei der Bearbeitung werden die Werkstücke durch das Förderband (37a) zum Bearbeiten hinzugefügt und nach der Bearbeitung wieder abtransportiert.

Bei einer 5-Seitenbearbeitung der Werkstücke in der Werkzeugmaschine wird auf eine Zwischenspeicherung von Werkstücken in einem Radmagazin auf dem ersten Strukturteil (45) des Maschinenaufbaus verzichtet, sodass die Anordnung kompakt gehalten wird.

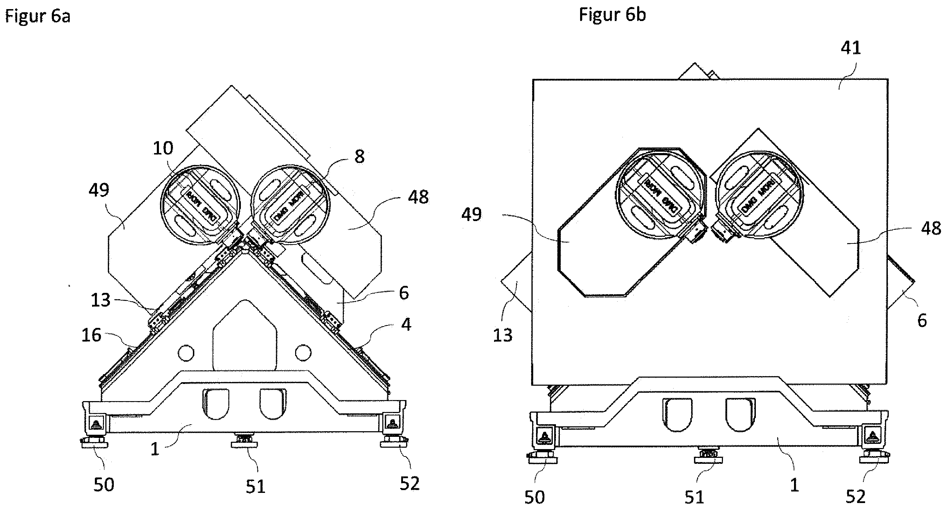

In Figur 6a ist ein zweites Ausführungsbeispiel des Maschinenbettes (1) aus Figur 2 dargestellt. Das Maschinenbett (1) ist dadurch erweitert, dass an dem ersten Schlitten (6) zwischen der ersten Arbeitsspindel (8) und dem ersten Schlitten (6) ein erstes Schutzblech (48) montiert ist. Das Schutzblech (48) ist starr und ist so an dem ersten Schlitten (6) befestigt, dass es beim Verfahren des ersten Schlittens (6) auf der ersten Schrägfläche (4) mitverfährt.

Auf dem zweiten Schlitten (13) ist zwischen der zweiten Arbeitsspindel (10) und dem zweiten Schlitten (13) ein zweites Schutzblech (49) angeordnet, dass starr ist und beim Verfahren des zweiten Schlittens (13) auf der zweiten Schrägfläche (16) mitverfahrbar angeordnet ist. Das zweite Schutzblech (49) liegt auf einer Ebene, die zu der Ebene des ersten Schutzbleches (48) in einer Tiefe versetzt ist, sodass die beiden Schutzbleche (48; 49) bei Bewegungen aufeinander zu überlappen können.

Zusätzlich wurde das Maschinenbett dahingehend erweitert, dass auf der Unterseite des Maschinenbettes (1) drei Punktauflagen (50, 51, 52) angeordnet sind, auf denen die Anordnung ausgerichtet ist.

In Figur 6b ist ein drittes Ausführungsbeispiel des Maschinenbettes (1) aus Figur 2 dargestellt. Das Maschinenbett (1) umfasst die aus Figur 6a bekannten Schutzbleche (46; 49) und die aus Figur 3 und 5 bekannte Begrenzungswand (41), wobei das Maschinenbett (1) als Erweiterung die Kombination aus den Schutzvorrichtungen zeigt. Die Aussparungen in der Begrenzungswand (41) für die beiden Arbeitsspindeln (8; 10) werden durch die beiden Schutzbleche (48, 49) verdeckt. Durch die Begrenzungswand (41) und die beiden Schutzbleche (48, 49) ist der Bereich hinter der Begrenzungswand (41) vollständig vor Spänen geschützt. Wie in Figur 6a beschrieben, sind die beiden Schutzbleche (48, 49) in der Ebene versetzt angeordnet, sodass die beiden Arbeitsspindeln (8; 10) auf den Schrägflächen ungestört auf den beiden Schrägflächen (4, 16) verfahren und die beiden Schutzbleche (48, 49) in der obersten Position nicht miteinander kollidieren können.

## Patentansprüche

1. Eine Werkzeugmaschine, umfassend:
- ein Maschinenbett (1),
- eine erste auf dem Maschinenbett (1) verfahrbare Arbeitsspindel (8), und
- eine erste und eine zweite Schrägfläche (4, 16), die auf einer Oberseite (2) des Maschinenbettes (1) angeordnet sind und mit der Oberseite (2) einen Winkel bilden, wobei die zweite Schrägfläche (16) in einem Winkel zu der ersten Schrägfläche steht (4),
wobei auf der ersten Schrägfläche (4) Führungen (7) montiert sind, durch die die erste Arbeitsspindel (8) in eine erste Richtung auf der ersten Schrägfläche (4) schräg auf dem Maschinenbett (1) verfahrbar ist,
**gekennzeichnet, durch**
eine zweite auf dem Maschinenbett (1) verfahrbare Arbeitsspindel (10), die auf Führungen (17), die auf der zweiten Schrägfläche (16) montiert sind, in einer zweiten Richtung schräg auf dem Maschinenbett (1) verfahrbar ist.

2. Werkzeugmaschine nach Anspruch 1, **dadurch gekennzeichnet, dass** die Arbeitsspindeln (8, 10) um eine Achse drehbar sind, die senkrecht zur Bewegungsrichtung der Arbeitsspindeln (8, 10) auf der jeweiligen Schrägfläche (4, 16) angeordnet ist und/oder die Arbeitsspindeln (8, 10) entlang einer Achse senkrecht zur Bewegungsrichtung der Arbeitsspindeln (8, 10) auf der jeweiligen Schrägfläche (4, 16) verfahrbar sind.

3. Werkzeugmaschine nach Anspruch 1-2, **dadurch gekennzeichnet, dass** Bewegungsrichtungen von mindestens zwei der Arbeitsspindeln (8, 10) auf der jeweiligen Schrägfläche (4, 16) in einer Ebene liegen.

4. Eine Werkzeugmaschine nach Anspruch 3,
**dadurch gekennzeichnet,**
**dass** die Ebene vertikal zu der Oberseite (2) des Maschinenbettes (1) verläuft.

5. Werkzeugmaschine nach Anspruch 1-4, **dadurch gekennzeichnet, dass** auf der Oberseite (2) des Maschinenbettes (1) ein Dachbett angeordnet ist und beide Dachflächen als die Schrägflächen (4, 16) in einem Winkel von 90 Grad zueinander stehen.

6. Werkzeugmaschine nach Anspruch 1-5, **dadurch gekennzeichnet, dass** mindestens eine Arbeitsspindel (10) auf einem Schlitten (13) montiert ist, der auf den Führungen (17) in der ersten Richtung verfahrbar angeordnet ist und dass auf dem Schlitten (13) zweite Führungen (33) angeordnet sind, auf denen die auf dem Schlitten (13) montierte Arbeitsspindel (10) entlang der Achse senkrecht zur Bewegungsrichtung der Arbeitsspindel (10) auf der zugehörigen Schrägfläche (16) verfahrbar ist.

7. Werkzeugmaschine nach Anspruch 6, **dadurch gekennzeichnet, dass** einer der Schlitten einen Reitstock (14) mit einer Zentrierspitze (12) umfasst, der mit dem Schlitten (13) verfahrbar ist und einen Hub in der Bewegungsrichtung der Arbeitsspindel (8) vollzieht.

8. Werkzeugmaschine nach Anspruch 1-7, **dadurch gekennzeichnet, dass** die Werkzeugmaschine mindestens ein Radmagazin (20) zur Aufnahme von Werkzeugen und/oder Werkstücken umfasst, wobei ein Manipulator (24) zum Wechseln von Werkstücken und/oder Werkzeugen aus einer Wechselposition senkrecht zur Umfangfläche des Radmagazins (20) unterhalb des Radmagazins (20) verfahrbar angeordnet ist, wobei beim Wechseln der Werkzeuge und/oder Werkstücke eine Aufnahme des Manipulators (24) und die Wechselposition des Radmagazins (20) in einer vertikalen Linie gebracht werden können.

9. Werkzeugmaschine nach Anspruch 8, **dadurch gekennzeichnet, dass** die Werkzeugmaschine zwei Radmagazine umfasst (22, 31), wobei die Radmagazine (22, 31) einander parallel gegenüberliegend angeordnet sind und die beiden Radmagazine (22, 31) seitlich zu den beiden Arbeitsspindeln (8, 10) stehen, so dass die Anordnung bestehend aus den beiden Arbeitsspindeln (8, 10) von den beiden Radmagazinen (22, 31) seitlich begrenzt werden.

10. Werkzeugmaschine nach einem Anspruch 8 oder 9, **dadurch gekennzeichnet, dass** die Werkzeugmaschine mindestens eine zusätzliche Speichereinheit (37) zur Aufnahme von Werkzeugen und/oder Werkstücken umfasst, die dazu eingerichtet ist, Werkzeuge und/oder Werkstücke in eine Entnahmeposition (44) zu verbringen, aus der die Werkzeuge und/oder Werkstücke in das Radmagazin (22) eingewechselt oder aus dem Radmagazin (22) ausgewechselt werden können.

11. Werkzeugmaschine nach einem Anspruch 10, **dadurch gekennzeichnet, dass** die Speichereinheit (37) ein Förderband und der Manipulator (24) eine Hubvorrichtung (35) umfasst, wobei die Werkzeuge und/oder Werkstücke durch das Förderband zu der Entnahmeposition (44) verfahren werden können, in der die Werkzeuge und/oder Werkstücke durch die Hubvorrichtung (35) vertikal angehoben und durch den Manipulator (24) aufgenommen werden, sodass die Werkzeuge und/oder Werkstücke von der Entnahmeposition (44) zum Radmagazin (22) oder zu einer der Arbeitsspindeln (8; 10) durch den Manipulator (24) verfahren werden können.

12. Werkzeugmaschine nach Anspruch 10, **dadurch gekennzeichnet, dass** die Werkzeugmaschine zwei Speichereinheiten (37, 39) und zwei und zwei Radmagazine (22, 31) umfasst und die Werkzeugmaschine dazu eingerichtet ist Werkzeuge und/oder Werkstücke über die erste Speichereinheit (37) bzw. das erste Radmagazin (22) einer Bearbeitung zuzuführen und nach Bearbeitung über die zweite Speichereinheit (39) bzw. das zweite Radmagazin (31) abzutransportieren.

13. Werkzeugmaschine nach Anspruch 1-12, **dadurch gekennzeichnet, dass** die Anordnung in Bezug auf Geometrie und Position der Schrägflächen (4, 16) und der Arbeitsspindeln (8, 10) derart ausgestaltet ist, dass ein thermosymmetrischer Aufbau der Werkzeugmaschine resultiert.

## Claims

1. A machine tool, comprising:
- a machine bed (1),
- a first work spindle (8) movable on the machine bed (1), and
- a first and a second inclined surface (4, 16), which are arranged on an upper side (2) of the machine bed (1) and form an angle with the upper side (2), wherein the second inclined surface (16) is at an angle to the first inclined surface (4),
wherein guides (7) are mounted on the first inclined surface (4), by means of which the first work spindle (8) is movable in a first direction on the first inclined surface (4) obliquely on the machine bed (1),
**characterized by**
a second work spindle (10) movable on the machine bed (1), which is movable on guides (17) mounted on the second inclined surface (16) in a second direction obliquely on the machine bed (1).

2. The machine tool according to claim 1, **characterized in that** the work spindles (8, 10) are rotatable about an axis, which is arranged perpendicular to the movement direction of the work spindles (8, 10) on the respective inclined surface (4, 16) and/or the work spindles (8, 10) are movable along an axis perpendicular to the movement direction of the work spindles (8, 10) on the respective inclined surface (4, 16).

3. The machine tool according to claim 1-2, **characterized in that** movement directions of at least two of the work spindles (8, 10) lie on the respective inclined surface (4, 16) in one plane.

4. A machine tool according to claim 3, **characterized in that** the plane runs vertically to the upper side (2) of the machine bed (1).

5. The machine tool according to claim 1-4, **characterized in that** a roof bed is arranged on the upper side (2) of the machine bed (1) and both roof surfaces as the inclined surfaces (4, 16) are at an angle of 90 degrees to each other.

6. The machine tool according to claim 1-5, **characterized in that** at least one work spindle (10) is mounted on a slide (13), which is arranged on the guides (17) movably in the first direction and that second guides (33) are arranged on the slide (13), on which the work spindle (10) mounted on the slide (13) is movable along the axis perpendicular to the movement direction of the work spindle (10) on the associated inclined surface (16).

7. The machine tool according to claim 6, **characterized in that** one of the slides comprises a tailstock (14) with a centering tip (12), which is movable with the slide (13) and performs a stroke in the movement direction of the work spindle (8).

8. The machine tool according to claim 1-7, **characterized in that** the machine tool comprises at least one wheel magazine (20) for receiving tools and/or workpieces, wherein a manipulator (24) for changing workpieces and/or tools from a changing position is arranged movably perpendicular to the circumferential surface of the wheel magazine (20) below the wheel magazine (20), wherein upon changing the tools and/or workpieces a receiving of the manipulator (24) and the changing position of the wheel magazine (20) can be brought in a vertical line.

9. The machine tool according to claim 8, **characterized in that** the machine tool comprises two wheel magazines (22, 31), wherein the wheel magazines (22, 31) are arranged opposite each other in parallel and the two wheel magazines (22, 31) stand laterally to the two work spindles (8, 10), so that the arrangement consisting of the two work spindles (8, 10) is laterally limited by the two wheel magazines (22, 31).

10. The machine tool according to claim 8 or 9, **characterized in that** the machine tool comprises at least one additional storage unit (37) for receiving tools and/or workpieces, which is adapted to bring tools and/or workpieces into a removal position (44), from which the tools and/or workpieces can be changed into the wheel magazine (22) or can be changed out of the wheel magazine (22).

11. The machine tool according to claim 10, **characterized in that** the storage unit (37) comprises a conveyor belt and the manipulator (24) comprises a lifting device (35), wherein the tools and/or workpieces can be moved by the conveyor belt to the removal position (44), in which the tools and/or workpieces are lifted vertically by the lifting device (35) and received by the manipulator (24), so that the tools and/or workpieces can be moved from the removal position (44) to the wheel magazine (22) or to one of the work spindles (8; 10) by the manipulator (24).

12. The machine tool according to claim 10, **characterized in that** the machine tool comprises two storage units (37, 39) and two and two wheel magazines (22, 31) and the machine tool is adapted to feed tools and/or workpieces via the first storage unit (37) or the first wheel magazine (22) to a machining and to transport them away after machining via the second storage unit (39) or the second wheel magazine (31).

13. The machine tool according to claim 1-12, **characterized in that** the arrangement with respect to geometry and position of the inclined surfaces (4, 16) and the work spindles (8, 10) is configured such that a thermosymmetrical construction of the machine tool results.

## Revendications

1. Machine-outil, comprenant :
- un bâti de machine (1),
- une première broche de travail (8) déplaçable sur le bâti de machine (1), et
- une première et une deuxième surface oblique (4, 16), qui sont disposées sur un côté supérieur (2) du bâti de machine (1) et forment un angle avec le côté supérieur (2), la deuxième surface oblique (16) formant un angle avec la première surface oblique (4),
des guides (7) étant montés sur la première surface oblique (4), par lesquels la première broche de travail (8) peut être déplacée dans une première direction sur la première surface oblique (4) de manière oblique sur le bâti de machine (1),
**caractérisée par**
une deuxième broche de travail (10) déplaçable sur le bâti de machine (1), qui peut être déplacée sur des guides (17), qui sont montés sur la deuxième surface oblique (16), dans une deuxième direction de manière oblique sur le bâti de machine (1).

2. Machine-outil selon la revendication 1, **caractérisée en ce que** les broches de travail (8, 10) peuvent tourner autour d'un axe, qui est disposé perpendiculairement à la direction de déplacement des broches de travail (8, 10) sur la surface oblique (4, 16) respective et/ou les broches de travail (8, 10) peuvent être déplacées le long d'un axe perpendiculairement à la direction de déplacement des broches de travail (8, 10) sur la surface oblique (4, 16) respective.

3. Machine-outil selon la revendication 1 ou 2, **caractérisée en ce que**
des directions de déplacement d'au moins deux des broches de travail (8, 10)
se situent sur la surface oblique (4, 16) respective dans un plan.

4. Machine-outil selon la revendication 3, **caractérisée en ce que** le plan s'étend verticalement par rapport au côté supérieur (2) du bâti de machine (1).

5. Machine-outil selon la revendication 1 à 4, **caractérisée en ce qu'**un bâti de toit est disposé sur le côté supérieur (2) du bâti de machine (1) et les deux surfaces de toit en tant que surfaces obliques (4, 16) forment un angle de 90 degrés l'une par rapport à l'autre.

6. Machine-outil selon la revendication 1 à 5, **caractérisée en ce qu'**au moins une broche de travail (10) est montée sur un chariot (13), qui est disposé sur les guides (17) de manière déplaçable dans la première direction et **en ce que** des deuxièmes guides (33) sont disposés sur le chariot (13), sur lesquels la broche de travail (10) montée sur le chariot (13) peut être déplacée le long de l'axe perpendiculairement à la direction de déplacement de la broche de travail (10) sur la surface oblique (16) associée.

7. Machine-outil selon la revendication 6, **caractérisée en ce qu'**un des chariots comprend une poupée (14) avec une pointe de centrage (12), qui peut être déplacée avec le chariot (13) et effectue une course dans la direction de déplacement de la broche de travail (8).

8. Machine-outil selon la revendication 1 à 7, **caractérisée en ce que** la machine-outil comprend au moins un magasin de roues (20) pour recevoir des outils et/ou des pièces à usiner, un manipulateur (24) pour le changement de pièces à usiner et/ou d'outils à partir d'une position de changement étant disposé de manière déplaçable perpendiculairement à la surface périphérique du magasin de roues (20) en dessous du magasin de roues (20), un logement du manipulateur (24) et la position de changement du magasin de roues (20) pouvant être amenés dans une ligne verticale lors du changement des outils et/ou des pièces à usiner.

9. Machine-outil selon la revendication 8, **caractérisée en ce que** la machine-outil comprend deux magasins de roues (22, 31), les magasins de roues (22, 31) étant disposés parallèlement l'un à l'opposé de l'autre et les deux magasins de roues (22, 31) se trouvant latéralement par rapport aux deux broches de travail (8, 10), de sorte que l'agencement constitué des deux broches de travail (8, 10) soit limité latéralement par les deux magasins de roues (22, 31).

10. Machine-outil selon la revendication 8 ou 9, **caractérisée en ce que** la machine-outil comprend au moins une unité de stockage (37) supplémentaire pour recevoir des outils et/ou des pièces à usiner, qui est conçue pour amener des outils et/ou des pièces à usiner dans une position de prélèvement (44), à partir de laquelle les outils et/ou les pièces à usiner peuvent être remplacés dans le magasin de roues (22) ou peuvent être remplacés à partir du magasin de roues (22).

11. Machine-outil selon la revendication 10, **caractérisée en ce que** l'unité de stockage (37) comprend une bande transporteuse et le manipulateur (24) comprend un dispositif de levage (35), les outils et/ou les pièces à usiner pouvant être déplacés par la bande transporteuse jusqu'à la position de prélèvement (44), dans laquelle les outils et/ou les pièces à usiner sont soulevés verticalement par le dispositif de levage (35) et sont reçus par le manipulateur (24), de sorte que les outils et/ou les pièces à usiner puissent être déplacés de la position de prélèvement (44) jusqu'au magasin de roues (22) ou jusqu'à l'une des broches de travail (8 ; 10) par le manipulateur (24).

12. Machine-outil selon la revendication 10, **caractérisée en ce que** la machine-outil comprend deux unités de stockage (37, 39) et deux et deux magasins de roues (22, 31) et la machine-outil est conçue pour amener des outils et/ou des pièces à usiner par le biais de la première unité de stockage (37) ou du premier magasin de roues (22) à un usinage et les évacuer après l'usinage par le biais de la deuxième unité de stockage (39) ou du deuxième magasin de roues (31).

13. Machine-outil selon la revendication 1 à 12, **caractérisée en ce que** l'agencement en ce qui concerne la géométrie et la position des surfaces obliques (4, 16) et des broches de travail (8, 10) est configuré de telle sorte qu'il en résulte une construction thermosymétrique de la machine-outil.
